# EUROPÄISCHE PATENTANMELDUNG

(11) **EP 4 502 648 A1**
(43) Veröffentlichungstag der Anmeldung: **05.02.2025**
(21) Anmeldenummer: 23188565.8
(22) Anmeldetag: 31.07.2023
(51) Int. Cl.: G01S 7/40, G01S 7/41, G01S 7/497, G01S 7/52

(54) **VERFAHREN ZUR ERKENNUNG VON ANOMALIEN AN EINEM ECHOMESSGERÄT UND VERFAHREN ZUR BEREITSTELLUNG EINER KÜNSTLICHEN INTELLIGENZ, SOWIE COMPUTER-PROGRAMM UND COMPUTERLESBARES MEDIUM**

(71) Anmelder: Siemens Aktiengesellschaft, 80333 München (DE)
(72) Erfinder: Ens, Wolfgang, 76351 Linkenheim (DE)
(74) Vertreter: Siemens Patent Attorneys

(57) **Zusammenfassung**

Die Erfindung betrifft ein Verfahren zur Erkennung von Anomalien an einem Echomessgerät (1), wobei das Echomessgerät (1) mindestens eine Empfangseinheit (3) zum Empfangen eines Echosignals aufweist, wobei das Verfahren die folgenden Schritte umfasst:
a) Empfangen eines Echosignals durch die Empfangseinheit (3) und Auswerten dieses Echosignals;
b) Detektieren von Anomalien in dem Echosignal unter Verwendung zumindest einer trainierten künstlichen Intelligenz;
c) Ausgeben einer Information, dass eine Anomalie vorliegt, wenn eine Anomalie detektiert wird.

## Beschreibung

Die vorliegende Erfindung betrifft ein Verfahren zur Erkennung von Anomalien an einem Echomessgerät, wobei das Echomessgerät mindestens eine Empfangseinheit zum Empfangen eines Echosignals aufweist. Ferner betrifft die vorliegende Erfindung ein Verfahren zur Bereitstellung einer trainierten künstlichen Intelligenz zur Erkennung von Anomalien an einem Echomessgerät, wobei das Echomessgerät mindestens eine Empfangseinheit zum Empfangen eines Echosignals aufweist.

Echomessgeräte werden in verschiedenen Anwendungsbereichen eingesetzt. Beispielsweise können Radar- oder Ultraschall-Geräte verwendet werden, um Entfernungen zwischen dem Echomessgerät und einer Oberfläche zu messen oder um ein Oberflächenprofil auch über größere Entfernungen aufzuzeichnen. Solche Geräte können auf Laufzeitmessung basieren, d.h. ein Signal wird vom Gerät emittiert und es wird die Zeit ermittelt, bis ein reflektiertes oder zurückgestreutes Signal eine Empfangseinheit des Echomessgeräts erreicht.

Als Ergebnis gibt das Echomessgerät in der Regel einen Messwert, z.B. die Distanz zwischen Echomessgerät und einer Oberfläche, einen Füllstand oder eine Oberflächenprofil aus. Der Messwert wird dabei aus einem Echoprofil bestimmt. In einem solchen Echoprofil sind unter anderem die Reflektionen von Objekten im Bereich, der von einem emittierten Signal erfasst wird, enthalten. Allerdings wird das Echoprofil auch von weiteren Faktoren beeinflusst. Zum Beispiel können Verschmutzungen an einer Antenne, welche Bestandteil einer Empfangseinheit sein kann, vorliegen, wodurch das Echoprofil gestört wird. Andere Ursachen für ein fehlerhaftes Echoprofil können eine falsche Installation sein. Beispielsweise kann ein solches Echomessgerät in einem fehlerhaften Winkel zur zu detektierenden Oberfläche montiert sein. In dem Bereich des üblicherweise keulenförmigen emittierten Signals können außerdem Störobjekte angeordnet sein. Auch können Mehrfachreflektionen vorliegen, welche das Echoprofil beeinflussen. In diesem Fall ist das erste Signal im Echoprofil das "echte" Signal, und weitere Signale mit vielfachen Entfernungen bzw. Laufzeiten des echten Echos sind dann Mehrfachreflektionen.

Mit anderen Worten kann es sich bei Anomalien in einem Echoprofil um Auffälligkeiten handeln, die auf eine fehlerhafte Installation oder auf Störobjekte im erfassten Bereich zurückzuführen sind und/oder um Mehrfachreflektionen, die letztlich auf das gleiche erfasste Objekt zurückzuführen sind. Dadurch können fehlerhafte Installationen, Verschleiß oder Ablagerungen am Echomessgerät erkannt werden. Zusätzlich können Störobjekte identifiziert, bzw. das Nutzsignal von Störsignalen unterschieden werden, um sicher das Nutzsignal im Echoprofil zu identifizieren.

Üblicherweise kann ein erfahrener Benutzer eines Echomessgerätes erkennen, ob eine korrekte Installation vorliegt. Dazu greift er zumeist auf seine Erfahrung aus einer Vielzahl von Installationen und Korrekturen der Installationen von Echomessgeräten zurück. Außerdem kann ein erfahrener Benutzer auch erkennen, ob es sich um Mehrfachreflektionen handelt.

Obwohl erfahrene Benutzer in der Lage sind, aufgrund ihrer Erfahrung eine Anomalie in einem Echosignal zu erkennen, kann als nachteilig angesehen werden, dass solche erfahrenen Benutzer nicht immer zur Verfügung stehen bzw. nur eine begrenzte Arbeitskapazität haben.

Aufgabe der vorliegenden Erfindung ist es daher, ein Verfahren zur Erkennung von Anomalien an einem Echomessgerät zu schaffen, welches weniger personalaufwendig ist und weniger auf persönliche Erfahrungen eines Benutzers gestützt wird.

Diese Aufgabe ist bei einem Verfahren der eingangs genannten Art dadurch gelöst, dass es die folgenden Schritte umfasst:
a) Empfangen eines Echosignals durch die Empfangseinheit und Auswerten dieses Echosignals;
b) Detektieren von Anomalien in dem Echosignal unter Verwendung zumindest einer trainierten künstlichen Intelligenz;
c) Ausgeben einer Information, dass eine Anomalie vorliegt, wenn eine Anomalie detektiert wird.

Der Erfindung liegt die grundsätzliche Überlegung zugrunde, durch eine künstliche Intelligenz eine quasi automatisierte Auswertung des Echosignals durchzuführen. Eine solche trainierte künstliche Intelligenz ist in der Lage, fehlerhafte Installationen als Abweichungen von üblichen Echosignalen aufgrund ihres Trainings zu erkennen und somit gute Installationen von schlechten zu unterscheiden. Das Echosignal kann die Form eines Echoprofils aufweisen. Das bedeutet, dass die Intensität eines Signals über die Laufzeit dargestellt bzw. ermittelt wird. Insbesondere können mehrere Echosignale nacheinander erfasst werden. Dabei kann insbesondere das gesamte Echosignal direkt ausgewertet werden.

Das Verfahren kann ferner eine Klassifikation der Anomalie umfassen, insbesondere die Ausgabe einer Anomalieursache. Mit anderen Worten kann das Verfahren nicht nur darauf beschränkt sein, zu erkennen, dass eine Anomalie vorliegt, vielmehr kann das Verfahren auch auf Basis zumindest einer trainierten künstlichen Intelligenz eine Anomalieursache bestimmen.

Bei Anomalien kann es sich zum einen um Abweichungen im Echoprofil in Folge einer fehlerhaften Installation handeln. Möglich ist auch, dass die Anomalie auf Mehrfachreflektionen basiert und damit das erfindungsgemäße Verfahren dadurch gekennzeichnet sein kann, dass aus einer Vielzahl von Echos aus einem Echoprofil das korrekte Echo ausgewählt wird. Beispielsweise treten bei Mehrfachreflektionen eine Vielzahl von Echos auf, die um ein Vielfaches der Laufzeit eines ersten Echos auseinanderliegen, wobei sich die Intensität der weiteren Echos mit zunehmender Laufzeit verringert.

Das erfindungsgemäße Verfahren kann ferner die Ausgabe einer Abhilfemaßnahme zur Beseitigung der Anomalie umfassen. Die Ausgabe kann unmittelbar an dem Echomessgerät erfolgen oder an einem externen Rechner, insbesondere an einer Mensch-Maschine-Schnittstelle, bevorzugt an einem Display, stattfinden.

Zur Ermittlung der Anomalien kann neben dem aktuellen Echoprofil auch auf vorangegangene Profile zurückgegriffen werden. Dabei kann z.B. die Geschwindigkeit eines Peaks, d.h. die Veränderung der Lage eines Peaks, oder der Amplitude eines Peaks über die Zeit, oder eine Amplitudenänderung und/oder die minimale/maximale Position eines Peaks über die Zeit in den Echoprofilen verwendet werden.

Bevorzugt wird eine künstliche Intelligenz gemeinsam für die Auswertung des gesamten Echoprofils verwendet. Denkbar ist auch, dass verschiedene trainierte künstliche Intelligenzen für verschiedene Teile des Echoprofils verwendet werden. Die künstliche Intelligenz kann zumindest teilweise mit simulierten Messdaten trainiert worden sein. Die simulierten Messdaten können beispielsweise von einem Simulator erzeugt werden, wobei der Simulator auf physikalischen Modellen des Echomessgerätes basieren kann.

In weiterer Ausgestaltung kann das Echomessgerät eine Laufzeitmessung durchführen. Das Echomessgerät kann ein Ultraschallgerät oder ein Radargerät oder ein Ladargerät sein. Hierbei handelt es sich um übliche Geräte, welche ausgebildet sind, Signale zu emittieren und ein Echo dieser Signale zu erfassen bzw. aufzuzeichnen.

Das Echosignal bzw. Informationen aus einem Echosignal oder Daten betreffend ein Echosignal bzw. Echoprofil können an eine zentrale Rechnereinheit und/oder an eine Cloud gesendet werden, sodass dort mögliche Anomalien detektiert werden. Mit anderen Worten findet in diesem Fall keine lokale Detektion von Anomalien im Echomessgerät selbst statt, sondern in einer externen Rechnereinheit oder in einer Cloud. Dies hat den Vorteil, dass dort zentral eine Vielzahl von Daten hinterlegt sein kann, auf welche die künstliche Intelligenz zurückgreifen kann. Gleichzeitig können dort die Daten verschiedener Echomessgeräte gesammelt werden und zum weiteren Training der künstlichen Intelligenz herangezogen werden.

Alternativ kann eine Anomalie lokal in dem Echomessgerät detektiert werden. In diesem Fall ist keine aufwendige Datenübertragung an eine externe Rechnereinheit erforderlich.

Gemäß einer bevorzugten Ausführungsform umfasst das Verfahren ferner das Extrahieren eines Nutzsignals aus dem Echosignal. Mit anderen Worten kann vorgesehen sein, dass ausgehend von dem Echosignal, insbesondere einem Echoprofil, ein relevantes Nutzsignal ermittelt wird, indem detektierte Störsignale aus dem Echosignal eliminiert werden. Das Verfahren kann auch die Ausgabe eines ermittelten Nutzsignals bzw. Nutzechos umfassen.

Das Extrahieren des Nutzsignals, beispielsweise einer Entfernungsangabe, kann nicht nur auf Basis des vorliegenden bzw. aktuellen Echosignals erfolgen. Das Verfahren, bzw. die trainierte künstliche Intelligenz kann auch derart ausgestaltet sein, dass aus vorangegangenen Echosignalen oder unter Zuhilfenahme von vorangegangenen Echosignalen ein Nutzsignal ermittelt wird. Dazu können beispielsweise Veränderungen in der Amplitude von lokalen Maxima oder Peaks im Echosignal in Form eines Echoprofils, die Bewegungsgeschwindigkeit von lokalen Maxima oder die minimale und maximale Position von lokalen Maxima bzw. Peaks genutzt werden. Mit anderen Worten können nacheinander mehrere Echosignale empfangen werden, in denen sich über die Zeit Veränderungen ergeben, aus denen Informationen über Anomalien bzw. Störsignale gewonnen werden können. Eine derartige Vorgehensweise basiert auf der Überlegung, dass bei sich über die Zeit veränderlichen Echosignalen bestimmte Signale, insbesondere Peaks oder Maxima, an ihrer Position bleiben, während bestimmte Nutzsignale eine veränderliche Position haben. Möglich ist auch, dass bewegliche Teile wiederholt zu den gleichen Echosignalen führen. Damit kann zur Ermittlung der Lage eines Nutzsignals nicht nur das aktuelle Echosignal, beispielsweise in Form eines Echoprofils, herangezogen werden, sondern auch auf vorangegangene Echosignale bzw. Echoprofile zurückgegriffen werden.

Die der Erfindung zugrundeliegende Aufgabe ist ferner gelöst durch ein Verfahren zur Bereitstellung einer trainierten künstlichen Intelligenz zur Erkennung von Anomalien in einem Echomessgerät der eingangs genannten Art, welches die folgenden Schritte umfasst:
- Empfangen von Eingangs-Trainingsdaten, die ein von der Empfangseinheit eines Echomessgeräts empfangenes Echosignal, insbesondere das vollständige Echosignal, repräsentieren;
- Empfangen von Ausgangs-Trainingsdaten, welche Anomalien in den Echosignalen repräsentieren, wobei die Ausgangs-Trainingsdaten Zuordnungen zu den Eingangs-Trainingsdaten umfassen;
- Trainieren der künstlichen Intelligenz basierend auf den Eingangs-Trainingsdaten und den Ausgangs-Trainingsdaten derart, dass diese Anomalien gleichzeitig detektiert werden;
- Bereitstellen der trainierten künstlichen Intelligenz.

Dieser Ausgestaltung liegt die Überlegung zugrunde, dass die künstliche Intelligenz dadurch trainiert wird, dass Eingangs-Trainingsdaten empfangen werden, die auf einem von einer Empfangseinheit empfangenen Echosignal basieren. Insbesondere kann es sich dabei um das vollständige Echosignal, bzw. Echoprofil handeln. Je nachdem, wie bestimmte Trainingsdaten aussehen, können diesen bestimmte Ausgangs-Trainingsdaten zugeordnet werden. Beispielsweise können Zuordnungen zu bestimmten Anomalien, beispielsweise eine fehlerhafte Installation oder Mehrfachreflektionen, vorgenommen werden. Anschließend wird die künstliche Intelligenz dahingehend trainiert, dass sie in der Lage ist, gleichzeitig verschiedene Anomalien wahrzunehmen. Denn häufig tritt in Echosignalen nicht nur eine Anomalie auf, sondern mehrere oder sogar eine Vielzahl von Anomalien gleichzeitig. Mit anderen Worten kann so erreicht werden, dass aus einem Echosignal verschiedene Anomalien zuverlässig detektiert werden.

Die Ausgangs-Trainingsdaten können ferner eine Klassifikation von Anomalien und/oder eine Ausgabe einer Abhilfemaßnahme zur Beseitigung der jeweiligen Anomalie umfassen.

Ein erfindungsgemäßes Computer-Programm (oder Computer-Programm-Produkt) umfasst Anweisungen, die, wenn das Programm auf einem Computer ausgeführt wird, den Computer veranlassen, dass erfindungsgemäße Verfahren zur Erkennung von Anomalien auszuführen.

Ein weiteres erfindungsgemäßes Computer-Programm (oder Computer-Programm-Produkt) umfasst Anweisungen, die, wenn das Programm auf einem Computer ausgeführt wird, den Computer veranlassen, das vorstehend beschriebene Verfahren zur Bereitstellung einer trainierten künstlichen Intelligenz auszuführen.

Ferner umfasst die vorliegende Erfindung ein computerlesbares Medium umfassend ein Computer-Programm wie zuvor beschrieben.

Für die weitere Ausgestaltung der Erfindung wird auf die Unteransprüche und die Beschreibung des nachfolgenden Ausführungsbeispiels unter Bezugnahme auf die Zeichnung verwiesen. In der Zeichnung zeigt:

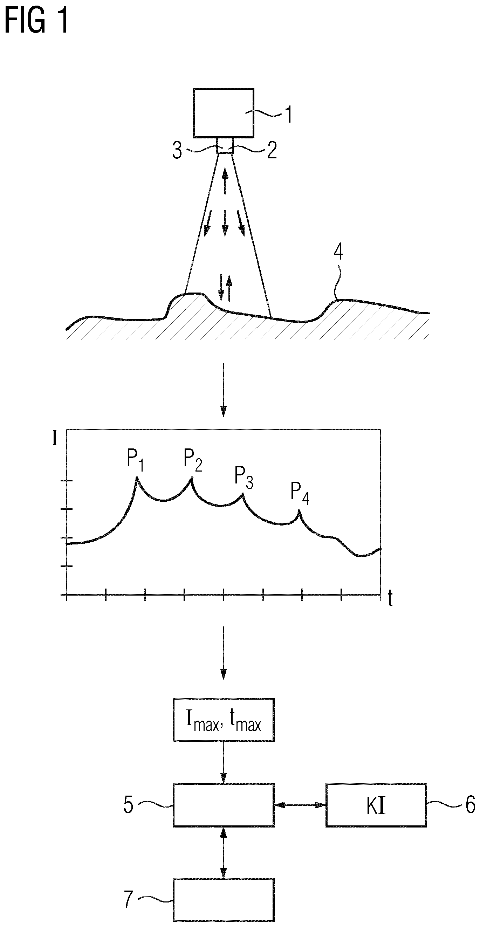

Figur 1 eine schematische Darstellung eines erfindungsgemäßen Verfahrens zur Erkennung von Anomalien an einem Echomessgerät.

In der Figur 1 ist oben zunächst ein Echomessgerät 1 dargestellt, welches eine Sendeeinheit 2 zum Emittieren eines Signals und eine Empfangseinheit 3 zum Empfangen eines Echosignals aufweist. Die von der Sendeeinheit 2 emittierten Signale werden an der schematisch dargestellten Oberfläche 4 reflektiert.

Konkret führt das Echomessgerät 1, welches beispielsweise als Radargerät ausgebildet ist, eine Laufzeitmessung durch, d.h. der Zeitversatz zwischen dem von der Sendeeinheit 2 emittierten Signal und dem von der Empfangseinheit 3 detektierten Echosignal wird ausgewertet. Schematisch ist in der Figur 1 unterhalb der Anordnung ein Echoprofil dargestellt. Auf der horizontalen Achse ist dabei die Laufzeit t angegeben, auf der vertikalen Achse allgemein die Intensität I des Echosignals. Bevorzugt wird das gesamte Echosignal ausgewertet. Das Echosignal, bzw. Echoprofil kann eine externe Rechnereinheit 5 übermittelt werden. Dort kann unter Verwendung einer trainierten künstlichen Intelligenz 6 eine Auswertung und insbesondere ein Detektieren von Anomalien stattfinden. Sobald eine Anomalie detektiert ist, kann entweder über die externe Rechnereinheit 5 oder direkt am Echomessgerät 1 eine Information ausgegeben werden, dass eine Anomalie vorliegt. Ferner kann durch die künstliche Intelligenz eine Klassifikation der Anomalie stattfinden, so dass zusätzlich die Anomalieursache ausgegeben werden kann. Möglich ist auch, dass zusätzlich eine Abhilfemaßnahme zur Beseitigung dieser Anomalie ausgegeben wird. Die Ausgabe der Information, dass eine Anomalie vorliegt, kann beispielsweise auf einem Display 7, welches mit der externen Rechnereinheit 5 verbunden ist, stattfinden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffes sind Personen mit männlicher, weiblicher oder anderer Geschlechteridentität mit umfasst.

## Patentansprüche

1. Verfahren zur Erkennung von Anomalien an einem Echomessgerät (1), wobei das Echomessgerät (1) mindestens eine Empfangseinheit (3) zum Empfangen eines Echosignals aufweist, wobei das Verfahren die folgenden Schritte umfasst:
a) Empfangen eines Echosignals durch die Empfangseinheit (3) und Auswerten dieses Echosignals;
b) Detektieren von Anomalien in dem Echosignal unter Verwendung zumindest einer trainierten künstlichen Intelligenz;
c) Ausgeben einer Information, dass eine Anomalie vorliegt, wenn eine Anomalie detektiert wird.

2. Verfahren nach Anspruch 1, **dadurch gekennzeichnet, dass** dieses ferner eine Klassifikation der Anomalie umfasst, insbesondere die Ausgabe einer Anomalieursache.

3. Verfahren nach Anspruch 1 oder 2, **dadurch gekennzeichnet, dass** dieses ferner die Ausgabe einer Abhilfemaßnahme zur Beseitigung der Anomalie umfasst.

4. Verfahren nach einem der vorherigen Ansprüche, **dadurch gekennzeichnet, dass** zum Auswerten des Echosignals und/oder zum Detektieren von Anomalien in dem Echosignal auf vorangegangene Echosignale zurückgegriffen wird, wobei insbesondere die Geschwindigkeit eines Peaks im Echosignal, die Amplitudenänderung eines Peaks und/oder die minimale und/oder maximale Position eines Peaks einem Echoprofil über die Zeit ausgewertet bzw. genutzt wird.

5. Verfahren nach einem der vorherigen Ansprüche, **dadurch gekennzeichnet, dass** eine künstliche Intelligenz (6) zur Auswertung des gesamten Echoprofils verwendet wird.

6. Verfahren nach einem der vorherigen Ansprüche, **dadurch gekennzeichnet, dass** die künstliche Intelligenz (6) zumindest teilweise mit simulierten Messdaten trainiert wird/wurde.

7. Verfahren nach einem der vorherigen Ansprüche, **dadurch gekennzeichnet, dass** das Echomessgerät (1) eine Laufzeitmessung durchführt und/oder ein Ultraschallgerät oder ein Radargerät oder ein Ladargerät ist.

8. Verfahren nach einem der vorherigen Ansprüche, **dadurch gekennzeichnet**, das Echoprofil an eine zentrale Rechnereinheit und/oder eine Cloud gesendet werden und dort mögliche Anomalien detektiert werden.

9. Verfahren nach einem der Ansprüche 1 bis 7, **dadurch gekennzeichnet, dass** die Anomalien lokal in dem Echomessgerät (1) detektiert werden.

10. Verfahren nach einem der vorherigen Ansprüche, **dadurch gekennzeichnet, dass** das Verfahren ferner das Extrahieren eines Nutzsignals aus dem Echosignal umfasst.

11. Verfahren zur Bereitstellung einer trainierten künstlichen Intelligenz zur Erkennung von Anomalien an einem Echomessgerät (1), wobei das Echomessgerät (1) mindestens eine Empfangseinheit (3) zum Empfangen eines Echosignals aufweist, mit folgenden Schritten:
- Empfangen von Eingangs-Trainingsdaten, die ein von der Empfangseinheit (3) empfangenes Echosignal repräsentieren;
- Empfangen von Ausgangs-Trainingsdaten, welche Anomalien in den Echosignalen repräsentieren, wobei die Ausgangs-Trainingsdaten Zuordnungen zu den Eingangs-Trainingsdaten umfassen;
- Trainieren der künstlichen Intelligenz basierend auf den Eingangs-Trainingsdaten und den Ausgangs-Trainingsdaten derart, dass diese Anomalien gleichzeitig detektiert werden;
- Bereitstellen der trainierten künstlichen Intelligenz.

12. Verfahren nach Anspruch 11, **dadurch gekennzeichnet, dass** die Ausgangs-Trainingsdaten ferner eine Klassifikation von Anomalien und/oder eine Ausgabe einer Abhilfemaßnahme zur Beseitigung der Anomalie umfassen.

13. Computer-Programm umfassend Anweisungen, die, wenn das Programm auf einem Computer ausgeführt wird, den Computer veranlassen, das Verfahren nach einem der Ansprüche 1 bis 10 auszuführen.

14. Computer-Programm umfassend Anweisungen, die, wenn das Programm auf einem Computer ausgeführt wird, den Computer veranlassen, das Verfahren nach Anspruch 11 oder 12 auszuführen.

15. Computerlesbares Medium umfassend ein Computer-Programm nach Anspruch 13 und/oder ein Computer-Programm nach Anspruch 14.
